# EUROPÄISCHE PATENTSCHRIFT

(11) **EP 2 283 254 B1**
(45) Veröffentlichungstag und Bekanntmachung des Hinweises auf die Patenterteilung: **30.05.2012**
(21) Anmeldenummer: 09745463.1
(22) Anmeldetag: 08.04.2009
(51) Int. Cl.: F16H 59/02, F16H 61/24

(54) **BETÄTIGUNGSEINRICHTUNG MIT FORCE FEEDBACK**
OPERATING DEVICE HAVING FORCE FEEDBACK
DISPOSITIF DE COMMANDE À RAPPEL DE FORCE

(30) Priorität: 15.05.2008 DE 102008001805
(43) Veröffentlichungstag der Anmeldung: 16.02.2011
(73) Patentinhaber: ZF Friedrichshafen AG, 88038 Friedrichshafen (DE)
(72) Erfinder: RAKE, Ludger, 49356 Diepholz (DE); GIEFER, Andreas, 49448 Lemförde (DE)
(86) Internationale Anmeldenummer: PCT/DE2009/050020
(87) Internationale Veröffentlichungsnummer: WO 2009/138079

(56) Entgegenhaltungen:
- EP-A- 1 898 126
- WO-A-2005/036031
- DE-A1- 19 848 191
- DE-A1-102004 041 690
- DE-B3-102005 060 933
- US-A- 4 986 689

## Beschreibung

Die Erfindung betrifft eine Betätigungseinrichtung zur Auswahl von Schaltstufen eines shift-by-wire-Gang-wechselgetriebes gemäß dem Oberbegriff des Patentanspruchs 1, wie aus der DE-A1-10 2004 041690 bekannt.

Gangwechselgetriebe von Kraftfahrzeugen werden im Allgemeinen mittels einer im Griffbereich des Fahrers angeordneten Betätigungseinrichtung geschaltet bzw. gesteuert. Regelmäßig kommen hierzu Betätigungselemente wie Schalthebel oder Wählhebel zum Einsatz, die beispielsweise zwischen den Frontsitzen des Kraftfahrzeugs oder in anderen Bereichen des Cockpits angeordnet sind.

Dabei wird aus Gründen der Ergonomie und Sicherheit insbesondere gefordert, dass dem Fahrer etwaige momentan nicht zulässige Schaltzustände, oder der Ablauf der angeforderten Schaltoperation, in Form entsprechender Schaltwiderstände bzw. Sperren am Betätigungshebel haptisch deutlich spürbar signalisiert werden. Nur auf diese Weise kann eine haptische Schaltbetätigung realisiert werden, wie der Fahrer sie beispielsweise vom vollsynchronisierten mechanischen Schaltgetriebe mit dessen drehzahl- und geschwindigkeitsabhängigen Synchronsperren, oder auch von der konventionellen Betätigung eines Getriebeautomaten mit dessen Rastierung und dessen Schaltsperren kennt und gewohnt ist.

Daher ist es in jedem Fall erforderlich, dass dem Fahrer bei der Getriebebetätigung klare taktile Rückmeldungen über den aktuellen Schalt- bzw. Betriebszustand des Getriebes bzw. über den Schalterfolg vermittelt werden.

Bei der elektrischen bzw. shift-by-wire-Betätigung von Gangwechselgetrieben existiert jedoch keine mechanische Kopplung mehr zwischen dem Betätigungshebel in der Fahrgastzelle und dem Kraftfahrzeuggetriebe im Motorraum. Vielmehr erfolgt die Übertragung der Schaltbefehle von der Betätigungseinrichtung zum Kraftfahrzeuggetriebe beim "shift-by-wire"-Getriebe mittels elektrischer oder elektronischer Signale und anschließender zumeist elektrohydraulischer Umsetzung der Schaltbefehle am Getriebe. Die fehlende mechanische Verbindung zwischen der Getriebeaktuatorik und dem Betätigungshebel führt dabei jedoch dazu, dass der Getriebezustand, etwaige Getriebe-Schaltsperren oder unzulässige Schaltbefehle nicht mehr direkt und für den Fahrer spürbar auf den Zustand des Betätigungshebels rückwirken können.

Der Fahrer kann bei shift-by-wire-gesteuerten Getrieben somit nicht ohne weiteres anhand bestimmter am Betätigungshebel spürbar blockierter Schaltstellungen erkennen, dass Schalthebelstellungen, Fahrstufen bzw. Schaltbefehle im momentanen Fahrzustand eventuell nicht zulässig sind und somit auch nicht angewählt werden sollten. Ebensowenig wirkt im Fall der shift-by-wire-Betätigung die tatsächliche Ausführung der Schaltbefehle des Fahrers durch das Getriebe auf den Betätigungshebel zurück, weshalb der Fahrer den Ablauf der Schaltbetätigung somit auch nicht haptisch spürbar wahrnehmen kann, wie er dies beispielsweise vom mechanisch betätigten Schaltgetriebe mit dessen Rastierung und Getriebe-Synchronsperren gewohnt ist.

In Abhängigkeit des Zustands des zu bedienenden Gangwechselgetriebes sowie in Abhängigkeit anderer Zustandsfaktoren am Kraftfahrzeug - z.B. Motordrehzahl, Fahrzeuggeschwindigkeit, Kupplungsstellung etc. - ist es zur Realisierung des erforderlichen haptischen Feedback bei shift-by-wire-gesteuerten Getrieben somit notwendig, die Bewegung des Betätigungshebels je nach Getriebezustand aktiv gesteuert zu begrenzen, zu verzögern oder ganz zu blockieren.

Nur auf diese Weise kann dem Fahrer beim Griff nach dem Betätigungshebel auch bei einem shift-by-wire-gesteuerten Getriebe haptisch spürbar beispielsweise vermittelt werden, dass sein Schaltwunsch - aufgrund der aktuellen Geschwindigkeit des Kraftfahrzeugs bzw. aufgrund eines momentanen Betriebszustands des Gangwechselgetriebes - nicht zulässig und damit gesperrt ist. Auch lässt sich somit vermeiden, dass vom shift-by-wire-Getriebe aktuell nicht umsetzbare Schaltbefehle, die von der Getriebe-Elektronikeinheit erkannt und somit nicht von der Betätigungseinrichtung an das Getriebe übermittelt werden, am Betätigungshebel dennoch eingelegt werden können.

Eine solche Aktuatorik am Betätigungshebel ist ferner erforderlich, wenn der Fahrer auch bei einem shift-by-wire-gesteuerten Getriebe dieselbe haptische Rückmeldung erfahren soll wie bei einem mechanisch betätigten Getriebe - wie beispielsweise bei einem manuellen Schaltgetriebe mit Übertragungsgestänge - bei dem das Einlegen der einzelnen Gänge am Schalthebel insbesondere drehzahl- bzw. geschwindigkeitsabhängig spürbar entsprechende Gegenkraftverläufe am Bedienhebel erzeugt.

Aus der DE 10 2004 041 690 A1, welche alle Merkmale des Oberbegriffs des Anspruchs 1 offenbart, ist ein elektrischer Schalter, insbesondere in der Art eines Joystick- oder Cursor-Schalters bekannt. Der Schalter besitzt ein Betätigungsorgan, das mit einem Bewegungsmittel derart zusammenwirkt, dass das Betätigungsorgan verstellbar, insbesondere verdrehbar, verschiebbar, verschwenkbar o. dgl. ist. Das Bewegungsmittel steht mit einer magnetorheologisch und/oder elektrorheologisch arbeitenden Einrichtung derart in Wirkverbindung, dass eine Haptik, die insbesondere veränderbar ist, für die Verstellbewegung des Betätigungsorgans erzeugt wird. Bei Verstellung des Betätigungsorgans wirkt das Bewegungsmittel auf ein Sensorelement signalgebend und/oder schaltend ein.

Die WO 2005/036031 A1 beschreibt einen manuellen Betätigungsmechanismus umfassend einen Hebel und ein Betätigungselement, deren jedes mindestens einen Zahnradzahn trägt, wobei die Zahnradzähne verzahnt sind und so betätigbar sind, dass sie eine Bewegung des Hebels an das Betätigungselement übertragen, wobei die verzahnten Zahnradzähne einen Zwischenraum definieren, der von einem magnetorheologischen Fluid eingenommen ist, wobei der Mechanismus ferner eine oder mehrere magnetische Spulen beinhaltet, die so ausgebildet sind, dass sie ein elektromagnetisches Feld im Bereich des magnetorheologischen Fluids bilden und damit seine Viskosität verändern.

Um einen Wählhebel, insbesondere des "Shift-By-Wire"-Typs, in seiner Bauhöhe zu reduzieren, ist aus der DE 102005060933 B3 bekannt, die Wählhebelstange (1) über eine erste (2) und eine zweite (3) Achse in einem Gehäuse (10) zu lagern, die räumlich voneinander getrennt, senkrecht zueinander verlaufen und jeweils in Achsrichtung verschiebbar sind. Dadurch wird ermöglicht, vorzusehende Haptikelemente in Bezug auf die Wählhebelstange stationär anzuordnen. Als Haptikelemente sind unter anderem magnetorheologische Dämpfer denkbar.

Wie zum Beispiel aus der DE 198 48 191 A1 hervorgeht, ist im Stand der Technik versucht worden, eine Haptik bei einem Betätigungselement für ein Gangwechselgetriebe zu realisieren, indem das Betätigungselement mit einem elektronisch steuerbaren Krafterzeugungselement bzw. Bewegungsdämpfer versehen worden ist, der mittels einer Steuereinrichtung so angesteuert wird, dass bei der Bedienung des Betätigungselements durch den Fahrer die mit den jeweiligen Zustandsänderungen im Gangwechselgetriebe einhergehenden Gegenkräfte am Betätigungselement simuliert werden können.

Diese aus dem Stand der Technik bekannte Betätigungseinrichtung mit einem elektronisch steuerbaren Bewegungsdämpfer ist jedoch nachteilig insofern, als der Bewegungsdämpfer gemäß der Lehre dieser Druckschrift als zusätzliche Baugruppe im Bereich des Betätigungshebels, bzw. im Gehäuse der Betätigungseinrichtung untergebracht werden muss. Dies führt zu einem zusätzlichen baulichen Aufwand und benötigt separaten Bauraum, der bei den zunehmend kleiner werdenden Betätigungseinrichtungen für moderne Kraftfahrzeuggetriebe oftmals nicht zur Verfügung steht. Zudem benötigt die aus dieser Druckschrift ebenfalls bekannte Rückstellkrafterzeugung laut der Lehre dieser Druckschrift einen aktuatorischen Antrieb, der einen nicht unerheblichen Energieverbrauch und zusätzlichen Platzbedarf mit sich bringt.

Mit diesem Hintergrund ist es Aufgabe der vorliegenden Erfindung, eine Betätigungseinrichtung mit einer Force-Feedback-Einrichtung zur Haptikemulation zu schaffen - insbesondere zur elektrischen bzw. elektronischen shift-by-wire-Betätigung eines Gangwechselgetriebes - mit der sich die genannten Nachteile des Standes der Technik überwinden lassen. Die Betätigungseinrichtung soll dabei insbesondere platzsparend, konstruktiv einfach und damit kostengünstig darstellbar sein. Ferner soll eine zuverlässige und realistische Emulation der Haptik eines mechanisch rastierten Betätigungshebels ermöglicht werden.

Diese Aufgabe wird durch eine Betätigungseinrichtung mit den Merkmalen des Patentanspruchs 1 gelöst.

Bevorzugte Ausführungsformen sind Gegenstand der Unteransprüche.

Die Betätigungseinrichtung gemäß der vorliegenden Erfindung umfasst ein Sockelgehäuse sowie ein Betätigungselement, beispielsweise einen Betätigungshebel, wobei das Betätigungselement um eine am Sockelgehäuse angeordnete Lagerstelle dreh- bzw. schwenkbar ist. Ferner umfasst die Betätigungseinrichtung eine Force-Feedback-Einrichtung, die ein auf den Betätigungshebel wirkendes, elektronisch gesteuert verstellbares Element zur Erzeugung von Gegenkräften umfasst, wobei dieses Gegenkraftelement ein Fluid mit einer steuerbar variablen Viskosität enthält.

Des Weiteren ist das Gegenkraftelement durch einen mit dem Fluid gefüllten Lagerspalt einer Lagerstelle des Betätigungselements gebildet.

Auf diese Weise kann das im Stand der Technik in Form einer steuerbaren Dämpfereinrichtung als separates Bauteil erforderliche Gegenkraftelement entfallen, bzw. die Funktion des Gegenkraftelements kann extrem bauraumsparend in das Gelenk beispielsweise eines Betätigungshebels integriert werden. Kosten, konstruktiver Aufwand und benötigter Bauraum für eine Betätigungseinrichtung mit Force Feedback lassen sich dank der Erfindung somit entscheidend reduzieren.

Die Erfindung lässt sich zunächst einmal unabhängig davon verwirklichen, wie das Gelenk des Betätigungselements konstruktiv ausgebildet oder im Sockel der Betätigungseinrichtung angeordnet ist, solange der zur Darstellung des Gegenkraftelements erforderliche, fluidgefüllte Lagerspalt realisiert werden kann. Gemäß der Erfindung ist die Lagerstelle des Betätigungselements jedoch durch ein Kugelgelenk mit einer Gelenkkugel und einer Kugelschale gebildet, wobei der mit dem Fluid gefüllte Lagerspalt durch die Oberflächen von Gelenkkugel und Kugelschale definiert ist. Vorzugsweise sind dabei die Gelenkkugel des Kugelgelenks mit dem Betätigungselement und die Kugelschale mit dem Sockelgehäuse der Betätigungseinrichtung verbunden.

Diese Ausführungsform hat den besonderen Vorteil, dass prinzipiell beliebige Bewegungen bzw. Schaltschemata für das Betätigungselement realisierbar sind. Es lässt sich mit anderen Worten mit lediglich einem einzigen, dergestalt in das Kugelgelenk des Betätigungselements integrierten Gegenkraftelement die

Haptik eines mechanischen Betätigungshebels nicht nur entlang einer Betätigungsrichtung (eindimensional), sondern entlang beliebiger Betätigungsrichtungen (zweidimensional) simulieren.

Auf diese Weise wird es - insbesondere für den Bereich der Schalthebel bzw. Wählhebel für Gangwechselgetriebe - möglich, bei einem solchen Betätigungselement beliebige Schaltschemata rein softwareseitig zu realisieren bzw. deren Haptik frei programmierbar zu emulieren. Ein und dieselbe Betätigungseinrichtung kann dem Fahrer somit wahlweise die Haptik einer konventionellen Getriebebetätigung mit mehreren nebeneinander angeordnete Schaltgassen, oder aber die Haptik des Wählhebels eines Automatikgetriebes mit den hauptsächlich entlang einer Schaltgasse angeordneten Wählhebelstellungen zur Verfügung stellen. Je nach Präferenz des Fahrers kann das Betätigungselement somit auch rein softwareseitig beispielsweise zwischen Schaltgetriebe und Automatikgetriebe hin und her geschaltet werden. Auch beliebige andere Schaltschemata wie beispielsweise Tippbetätigung/Schrittschaltung oder stufenlose Schaltung lassen sich auf diese Weise realisieren.

Hierzu ist lediglich in Echtzeit die Position und jeweilige Bewegungsrichtung des Betätigungselements bzw. Wählhebels zu ermitteln, und in Abhängigkeit dieser beiden Werte das Gegenkraftelement - also das mit dem Fluid gefüllte Kugelgelenk - so anzusteuern, dass für den Bediener der Eindruck einer mechanischen Schaltkulisse bzw. der Eindruck einer dementsprechend eingeschränkten Bewegbarkeit des Betätigungselements entsteht. Bewegt der Bediener das Betätigungselement entlang einer zulässigen Richtung (also beispielsweise entlang einer der simulierten Schaltgassen einer konventionellen Getriebebetätigung), so wird das Kugelgelenk so angesteuert, dass keine oder nur geringe Gegenkräfte erzeugt werden, während beim Ansatz einer Bewegung quer zu einer zulässigen Richtung durch die Steuerung sofort entsprechend höhere Gegenkräfte im Kugelgelenk veranlasst werden. Ebenso kann während einer zulässigen Bewegung entlang einer der (simulierten) Schaltgassen die Simulation der Rastierung eines mechanischen Schalt- bzw. Wählhebels erfolgen dergestalt, dass dem Bediener bei der Bewegung des Betätigungselements die verschiedenen Raststufen bzw. Rastpositionen haptisch vermittelt werden. Auf diese Weise lassen sich beispielsweise auch die fahrzustandsabhängigen Wählhebelsperren bei einem Kraftfahrzeug-Automatikgetriebe flexibel realisieren, ohne dass hierzu eigens mechanische Sperreinrichtungen im Bereich des Wählhebels vorgesehen werden müssten.

Anstelle eine unzulässige Bewegung des Betätigungselements durch eine Blockierung des Betätigungselements - bzw. durch Erzeugung starker Gegenkräfte im Gelenk des Betätigungselements - zu verhindern, kann das Gegenkraftelement auch so angesteuert werden, dass beim Ansatz einer unzulässigen Bewegung ein spürbares Pulsieren des Betätigungselements erfolgt. Auf diese Weise wird dem Bediener somit haptisch spürbar vermittelt, dass sein Betätigungswunsch im aktuellen Systemzustand nicht ausgeführt werden kann, bzw. dass er versucht, das Betätigungselement in eine unzulässige Richtung zu bewegen.

Die Erfindung lässt sich zunächst einmal unabhängig davon verwirklichen, auf welche Weise und durch welchen physikalischen Effekt die Veränderung der Viskosität des Fluids erfolgt. So ist es beispielsweise - jedoch keineswegs ausschließlich - denkbar, ein elektrorheologisches Fluid zu verwenden, dessen Viskosität in Abhängigkeit eines angelegten elektrischen Feldes verändert werden kann.

Gemäß einer besonders bevorzugten Ausführungsform der Erfindung wird jedoch ein magnetorheologisches Fluid verwendet. Dabei ist im Bereich des Kugelgelenks eine Spuleneinrichtung zur Erzeugung eines Magnetfelds im Lagerspalt des Kugelgelenks angeordnet. Die Verwendung eines magnetorheologischen Fluids und einer Spuleneinrichtung ist vorteilhaft insofern, als sich so die gewünschte, veränderliche Gegenkrafterzeugung - basierend auf dem magnetorheologischen Prinzip - besonders einfach und zuverlässig darstellen lässt.

Nach einer weiteren bevorzugten Ausführungsform der Erfindung ist die Spuleneinrichtuug jedoch zur Erzeugung zumindest zweier unabhängig voneinander steuerbarer Magnetfelder eingerichtet, wobei die beiden unabhängig voneinander steuerbaren Magnetfelder im Wesentlichen senkrecht aufeinander stehende Magnetfeldrichtungen aufweisen. Die Kombination eines als Kugelgelenk ausgebildeten Gegenkraftelements mit zwei unabhängig voneinander steuerbarer, entlang verschiedener Raumrichtungen ausgerichteter Magnetfeldern ist vorteilhaft insofern, als sich auf diese Weise unterschiedliche Gegenkräfte für verschiedene Bewegungsrichtungen gleichzeitig erzeugen lassen. So kann das Betätigungselement bzw. der Wählhebel beispielsweise entlang der (virtuellen) Schaltkulisse leichtgängig geführt werden, während gleichzeitig seitliche Bewegungen quer zur Schaltkulisse durch dementsprechende, höhere seitliche Gegenkräfte auf den Hebel unterbunden werden können.

Anstelle der Verwendung mehrerer unabhängig voneinander steuerbarer Magnetfelder für verschiedene Bewegungsrichtungen kann die Bewegungsmöglichkeit des Betätigungselements entlang einer unzulässigen Richtung (also beispielsweise quer zu einer Schaltgasse) stattdessen auch rein mechanisch, beispielsweise durch eine Schaltkulisse unterbunden werden. In diesem Fall ist das Gegenkraftelement vorwiegend für die Erzeugung der typischen Rastierungs- bzw. Schaltkraftverläufe, sowie ggf. für die Blockierung momentan unzulässiger Hebelstellungen zuständig.

Gemäß einer weiteren bevorzugten Ausführungsform der Erfindung zeichnet sich die Betätigungseinrichtung dadurch aus, dass die Force-Feedback-Einrichtung ferner einen motorischen Aktuator umfasst. Dies ist vorteilhaft insofern, als sich auf diese Weise nicht nur Gegenkräfte am Betätigungselement erzeugen lassen, sondern das Betätigungselement zusätzlich auch aktiv aktuatorisch bewegt werden kann. Letzteres kann insbesondere dann von Bedeutung sein, wenn der Bediener das Betätigungselement in einer Stellung loslässt, die nicht einer der (virtuell) rastierten Positionen entspricht; oder wenn das Betätigungselement - beispielsweise im Fall einer mittels Auto-P automatisch eingelegten Parksperre - dem geänderten Schaltzustand des Getriebes nachgeführt werden soll.

Dabei ist das verstellbare Gegenkraftelement der Force-Feedback-Einrichtung - beispielsweise unter Einsatz eines Steuerungskennfelds - vorzugsweise zur Erzeugung von Gegenkräften gegen die vom Bediener aufgebrachten Handkräfte eingerichtet. Der motorische Aktuator hingegen ist - ebenfalls anhand des Steuerungskennfelds - vorzugsweise ausschließlich zur aktuatorischen Bewegung des Betätigungshebels eingerichtet. Auf diese Weise findet somit eine definierte Aufgabenteilung zwischen dem Krafterzeugungselement und dem motorischen Aktuator statt dergestalt, dass Gegenkräfte am Betätigungselement ausschließlich durch das Krafterzeugungselement und aktuatorische Bewegungen des Betätigungselements ausschließlich durch den motorischen Aktuator erzeugt werden.

Der Aktuator wird somit - im Sinne eines Force Feedback - im Unterschied zum eingangs genannten Stand der Technik nicht zur Gegenkrafterzeugung eingesetzt (da die Gegenkrafterzeugung erfindungsgemäß mittels des Gegenkraftelements in der Hebellagerung stattfindet), sondern dient ausschließlich dazu, den Betätigungshebel (im Falle weitgehender Kräftefreiheit) aktiv aktuatorisch zu bewegen.

Auf diese Weise lässt sich die Haptik eines mechanischen Betätigungshebels äußerst realistisch und praktisch vollständig simulieren und nachbilden. Insbesondere kann durch die Kombination des verstellbaren Krafterzeugungselements mit dem Aktuator auch die Haptik einer mechanischen Rastierung eines Betätigungselements vollkommen realistisch nachgebildet werden, ohne dass eine solche mechanische Rastierung tatsächlich vorhanden ist. Dabei ist das verstellbare Krafterzeugungselement spezifisch für die Erzeugung realistischer Gegenkräfte der Rastierung des Betätigungselements (bzw. der Gegenkräfte eines Fahrzeuggetriebes) zuständig, während der Aktuator spezifisch für das realistische Rückfedern des Betätigungshebels in die Vertiefungen der virtuellen Rastierkulisse zuständig ist, sobald der Betätigungshebel losgelassen wird, bzw. sobald vom Bediener keine nennenswerten Kräfte mehr auf den Betätigungshebel ausgeübt werden.

Dies ist auch dahingehend vorteilhaft, als sich so ein minimaler Energieverbrauch für Aktuatorik und Haptikemulation eines Betätigungshebels erreichen lässt, und gleichzeitig der Aktuator minimal dimensioniert werden kann. Denn im Unterschied zum Stand der Technik wird der Aktuator vorliegend lediglich zur Erzeugung von Bewegungen des Betätigungshebels, nicht aber zur Erzeugung nennenswerter Gegenkräfte am Betätigungshebel herangezogen, da sämtliche Gegenkräfte gegen die vom Bediener aufgebrachten Betätigungskräfte praktisch ausschließlich von dem steuerbaren Krafterzeugungselement erzeugt werden können.

Sobald der Bediener jedoch keine nennenswerten Betätigungskräfte mehr auf den Hebel ausübt bzw. diesen loslässt, kann durch die Steuerung und durch das hinterlegte Kennfeld eine entsprechende sofortige Umschaltung der Ansteuerung vom Krafterzeugungselement auf den motorischen Aktuator erfolgen, und es kann mittels des motorischen Aktuators das Zurückfallen des Betätigungshebels in die nächstliegende Vertiefung der (tatsächlich gar nicht vorhandenen) Rastkulisse des Getriebes bzw. der Betätigungseinrichtung simuliert werden. Die Erzeugung der beim Zurückfallen des Betätigungshebels in die Vertiefung der virtuellen Rastkulisse ggf. erforderlichen Bremskräfte sowie die bis zum Stillstand des Betätigungshebels erforderliche Bewegungsdämpfung können dabei entsprechend wieder durch das Krafterzeugungselement übernommen werden.

Hierdurch wird es beispielsweise auch möglich, einen Betätigungshebel mit einer variablen Rastierung auszustatten, bei der nicht nur die Härte der Rastierung, sondern auch die Anzahl der Rastvertiefungen sowie deren Abstand zueinander frei variabel eingestellt werden kann, und zwar lediglich per Software, bzw. mittels Auswahl eines entsprechenden Kennfelds für die Ansteuerung von Gegenkraftelement und motorischem Aktuator. Beispielsweise kann so sowohl die Anzahl der Rastierpunkte als auch deren Abstand und Härte softwareseitig im Hinblick auf die Präferenz des jeweiligen Nutzers bzw. Fahrers eingestellt werden. Sowohl der Kraft-Weg-Verlauf der Rastierung als auch die Charakteristik der Wählhebel-Haptik beispielsweise für ein Schaltgetriebe oder ein Automatikgetriebe lässt sich auf diese Weise rein softwareseitig frei programmierbar gestalten. Mittels des hinterlegten Kennfelds erfolgt dabei eine entsprechende Ansteuerung entweder des Krafterzeugungselements zur Erzeugung von Gegenkräften (solange der Benutzer Handkräfte auf den Hebel ausübt) oder des motorischen

Aktuators (sobald der Benutzer keine nennenswerten Handkräfte mehr auf den Hebel ausübt und der Hebel somit in eine seiner Rastpositionen zurückzufallen hat).

Auf diese Weise ist es sogar möglich, dem Fahrer je nach Wunsch oder Präferenz einmal die Haptik eines mechanisch betätigten Schaltgetriebes, und ein anderes Mal die Haptik eines Getriebeautomaten oder auch einer stufenlosen Schaltung zur Verfügung zu stellen.

Die Krafterzeugung durch das Gegenkraftelement kann von dem Aktuator jedoch auch aktiv motorisch unterstützt werden. In einem solchen Fall ist somit der Aktuator sowohl für selbsttätige Bewegungen des Betätigungselements zuständig (also beispielsweise für das realistische Zurückfallen des Wählhebels in seine Rastpositionen), als auch unterstützend für die Gegenkrafterzeugung, beispielsweise für die haptische Simulation einer Rastierung, oder für den Fall, dass aktuell unzulässige Wählhebelstellungen blockiert werden müssen.

Die Erfindung lässt sich unabhängig davon verwirklichen, wie der Aktuator konstruktiv ausgebildet und angeordnet wird. Gemäß einer bevorzugten Ausführungsform jedoch handelt es sich bei dem Aktuator der Betätigungseinrichtung um einen elektrischen Servo-Getriebemotor oder um einen Servo-Linearaktor. Hierdurch wird eine platzsparende, robuste und kostengünstige Konstruktion erreicht. Da der Aktuator nur für die Bewegung bzw. aktuatorische Rückführung des Betätigungshebels in die (virtuellen) Vertiefungen der Rastkulisse zuständig ist, während die Aufgabe der Erzeugung von Gegenkräften ausschließlich vom gesteuerten Krafterzeugungselement übernommen werden kann, wird es im Unterschied zum Stand der Technik zudem möglich, einen verhältnismäßig kleinen und leichten Aktuator zu verwenden.

Gemäß einer weiteren bevorzugten Ausführungsform der Erfindung ist das Gegenkraftelement und/oder der Aktuator auch zur Erzeugung von Vibrationen eingerichtet. Auf diese Weise lassen sich spürbare Vibrationen in das Betätigungselement einleiten, entweder in Form aktiver Vibrationsbewegungen mittels des Aktuators, oder aber - sobald vom Bediener versucht wird, eine unzulässige Bewegung einzuleiten - als passive Pulsationen in Form einer rasch periodisch schwankenden Dämpfungscharakteristik des Gegenkraftelements. Somit kann der Bediener bzw. Fahrer zum Beispiel gewarnt werden, falls versucht wird, im momentanen Fahrzustand eines Kraftfahrzeugs oder im momentanen Betriebszustand eines Kraftfahrzeuggetriebes nicht zulässige Schaltoperationen durchzuführen.

Im Folgenden wird die Erfindung anhand von Zeichnungen, die lediglich Ausführungsbeispiele darstellen, näher erläutert. Dabei zeigt:
- **Fig. 1**: in schematischer, teilweise geschnittener Darstellung einen Betätigungshebel mit einem Kugelgelenk gemäß dem Stand der Technik; und
- **Fig. 2**: in schematischer Schnittdarstellung das Wirkprinzip einer Ausführungsform der Betätigungseinrichtung gemäß der vorliegenden Erfindung, mit verstellbarem Krafterzeugungselement und Aktuator.

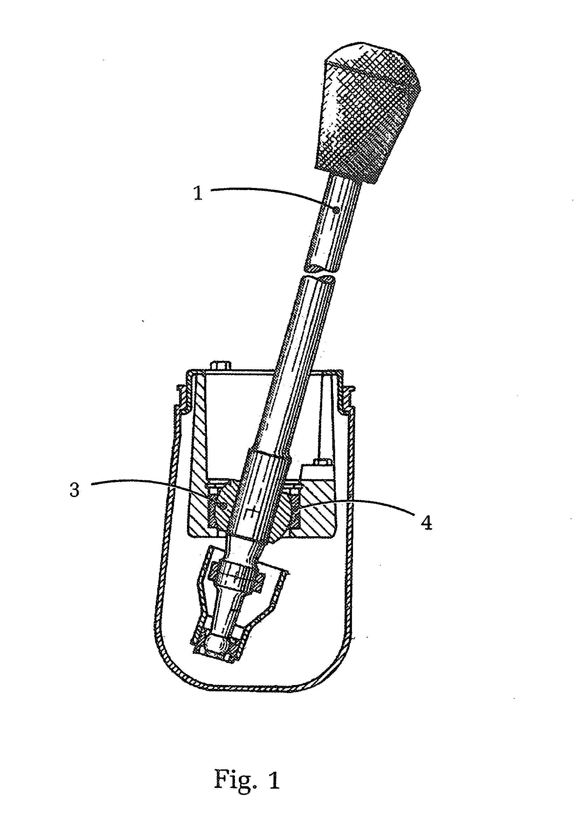

**Fig.1** zeigt zunächst einmal einen bekannten Betätigungshebel 1 mit einem Kugelgelenk gemäß dem Stand der Technik. Insbesondere erkennt man, dass der Betätigungshebel 1 ein Kugelgelenk mit einer Gelenkkugel 3 sowie einer Kugelschale 4 aufweist. Der Betätigungshebel 1 kann somit innerhalb seines Bewegungsbereichs zunächst in alle Richtungen um das Kugelgelenk verschwenkt werden.

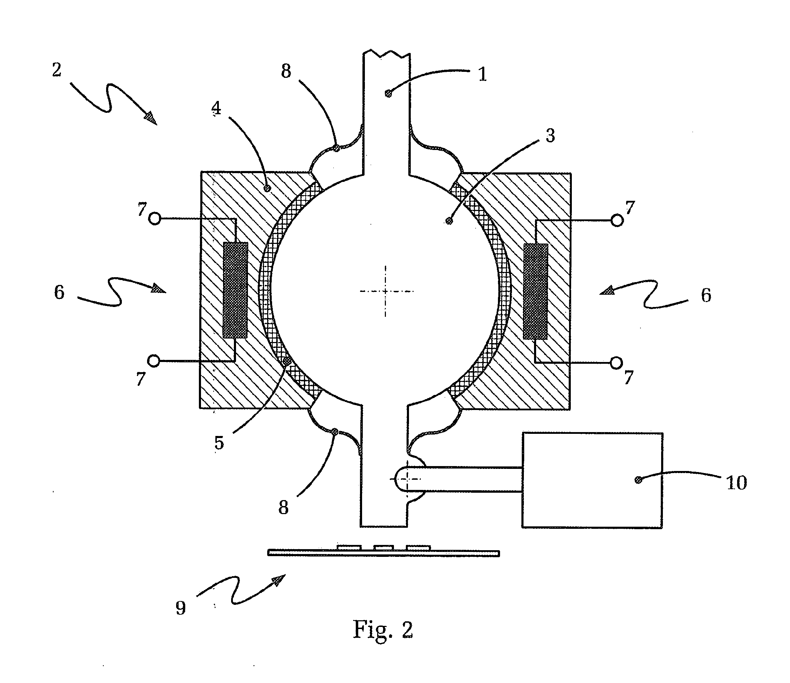

**Fig. 2** zeigt in einer höchst schematischen Prinzipdarstellung ein dem Kugelgelenk aus **Fig. 1** zunächst grundsätzlich entsprechendes Kugelgelenk einer Betätigungseinrichtung gemäß der vorliegenden Erfindung.

Man erkennt in **Fig. 2** zunächst wieder einen hier nur teilweise (in seinem unteren Bereich bzw. im Gelenkbereich) dargestellten Betätigungshebel 1. Der Betätigungshebel 1 ist wieder mittels einer in Form eines Kugelgelenks ausgebildeten Lagerung mit einem (hier nicht dargestellten) Sockel der Betätigungseinrichtung verbunden. Das Kugelgelenk gemäß **Fig. 2** umfasst dabei zunächst die am Betätigungshebel 1 angeordnete Gelenkkugel 3 sowie die mit dem (nicht dargestellten) Sockel verbundene Kugelschale 4.

Ferner umfasst die Darstellung der Fig. 2 erfindungsgemäß ein steuerbares Gegenkraftelement 2, sowie ferner einen auf den Betätigungshebel 1 wirkenden Aktuator 10. Zwischen der äußeren Oberfläche der Gelenkkugel 3 und der inneren Oberfläche der Kugelschale 4 befindet sich hierbei ein Lagerspalt 5 des Kugelgelenks. Der Lagerspalt 5 ist bei dem in Fig. 2 dargestellten Ausführungsbeispiel mit einem magnetorheologischen Fluid angefüllt. Das magnetorheologische Fluid ist so ausgebildet, dass es seine Viskosität in Abhängigkeit einer auf das Fluid wirkenden Magnetfeldstärke verändern kann.

Zur Erzeugung des für die Veränderung der Viskosität des magnetorheologischen Fluids erforderlichen Magnetfelds ist im Bereich der Kugelschale 4 - die ebenso wie die Gelenkkugel 3 vorzugsweise aus Kunststoff gefertigt ist, um die Ausbreitung des Magnetfelds nicht zu behindern - eine Magnetspuleneinrichtung 6 angeordnet. Mittels Einleitung elektrischen Stromes in die Anschlüsse 7 der Magnetspuleneinrichtung 6 lässt sich somit ein im weiten Umfang variables Magnetfeld im Bereich des Lagerspalts 5 bzw. des Fluids erzeugen. Auf diese Weise kann die mechanische Dämpfung des Kugelgelenks - beispielsweise durch eine softwareseitige Steuerung - in weiten Grenzen variabel sowie in Echtzeit gesteuert werden, indem das Fluid mittels des Magnetfelds der Magnetspuleneinrichtung 6 zwischen niedrigviskos (leichte Beweglichkeit der Gelenkkugel 3 bzw. des Betätigungshebels 2) und hochviskos bzw. nahezu fest (hoher Bewegungswiderstand der Gelenkkugel 3 bzw. Blockade des Betätigungshebels 2) eingestellt wird.

Zum Schutz des magnetorheologischen Fluids ist das Kugelgelenk im Bereich beider Durchtritte des Betätigungshebels 2 jeweils mit einem elastischen Dichtungsbalg 8 versehen. Zur Ermittlung der aktuellen Position des Betätigungshebels 2 durch die Steuerelektronik der Betätigungseinrichtung ist ferner eine Sensorik vorhanden, die in **Fig. 2** als Platine 9 schematisch angedeutet dargestellt ist.

Bei der in **Fig. 2** dargestellten Ausführungsform der Betätigungseinrichtung ist zusätzlich zu dem mittels des magnetorheologischen Fluids gebildeten Gegenkraftelement 2 auch ein Aktuator 10 vorgesehen. Der Aktuator 10 dient der softwaregesteuerten, aktiven aktuatorischen Bewegung des Betätigungshebels 2. Mittels des Aktuators 10 kann der Betätigungshebel 1 insbesondere selbsttätig in eine bestimmte Hebelstellung überführt werden, beispielsweise im Fall von Auto-P, also im Fall der beim Verlassen des Fahrzeugs automatisch eingelegten Parksperre.

Der Aktuator 10 lässt sich ferner zur Unterstützung einer besonders realistischen Nachbildung der Haptik einer Wählhebelrastierung einsetzen. Dabei dient das durch das magnetorheologische Fluid im Kugelgelenk 3, 4 gebildete Gegenkraftelement 2 der Simulation der Gegenkräfte, die eine mechanische Rastierung bei einer Betätigung erzeugen würde, während der Aktuator 10 das realistische Zurückfallen des Betätigungshebels 2 in die jeweiligen Mittelstellungen der Rastierung beim Loslassen des Betätigungshebels 2 simuliert.

Das Gegenkraftelement 2 ist somit für die Simulation der durch eine Rastiereinrichtung bzw. im Getriebe entstehenden Gegenkräfte - ggf. bis hin zur Blockierung des Betätigungshebels 2 bei unzulässigen Schaltbefehlen - bzw. zur Erzeugung entsprechender Pulsationen bei unzulässigen Bewegungen des Betätigungshebel zuständig. Der Aktuator 10 hingegen tritt vorzugsweise erst dann in Aktion, wenn der Betätigungshebel 1 bewegt werden muss, ohne dass vom Bediener bzw. Fahrer nennenswerte Kräfte auf den Betätigungshebel 1 ausgeübt werden. Dies ist insbesondere dann der Fall, wenn der Hebel 2 losgelassen wird, während er sich noch nicht genau in einer (virtuellen) Rastierposition befindet. In diesem Fall wird der Aktuator 10 durch die Steuerelektronik der Betätigungseinrichtung so angesteuert, dass der Betätigungshebel 1 mittels des Aktuators 10 in die Mitte der entsprechenden, virtuellen Rastierposition zurückfällt. Auf diese Weise lässt sich dem Bediener bzw. Fahrer exakt das Verhalten eines mechanisch rastierten Betätigungshebels präsentieren, obwohl eine mechanische Rastierung tatsächlich gar nicht vorhanden ist.

Ferner kann der Aktuator 10 auch dazu herangezogen werden, den Betätigungshebel 1 in die korrekte Schaltstellung nachzuführen, falls aus bestimmten Gründen eine Diskrepanz zwischen der Schaltstellung des Betätigungshebels 2 und dem tatsächlichen Schaltzustand im Getriebe auftreten sollte. Dies kann beispielsweise dann auftreten, wenn im Getriebe per Auto-P automatisch die Parksperre eingelegt wurde - beispielsweise beim Abziehen des Zündschlüssels oder beim Verlassen des Kraftfahrzeugs - falls der Fahrer vergisst, die Parksperre manuell einzulegen. In diesem Fall wird der Betätigungshebel 1 durch den Aktuator 10 automatisch in die Parksperrenstellung überführt, so dass für den Fahrer die Wählhebelstellung bei der Rückkehr zum Kraftfahrzeug mit der im Getriebe automatisch eingelegten Parksperre wieder übereinstimmt auch dann, wenn der Wählhebel vom Fahrer zuvor in einer Fahrstufenstellung belassen worden war.

Auch zur Darstellung der Haptik eines monostabilen Betätigungshebels ist die in Fig. 2 dargestellte Ausführungsform geeignet. In diesem Fall dient die Kombination aus Krafterzeugungselement 1 und Aktuator 10 einerseits wieder der realistischen Simulation der Rastierung und ggf. der Schaltsperren bzw. Schaltwiderstände in der Betätigungseinrichtung bzw. im Getriebe. Andererseits kann der Aktuator 10 in diesem Fall auch dazu herangezogen werden, den Betätigungshebel 1 nach der Auslenkung aus der Neutralstellung und nach dem Loslassen wieder in die Neutralstellung zurückzuführen, wie dies dem Verhalten eines mechanischen, monostabilen Betätigungshebels entspricht.

Beide Elemente - also Gegenkraftelement 2 und Aktuator 10 - zusammengenommen und durch eine gemeinsame Steuerelektronik angesteuert, ermöglichen somit rein softwareseitig nahezu beliebige Wählhebelrastierungen bzw. Schaltschemata in höchstem Maße realistisch nachzubilden.

Im Ergebnis wird damit deutlich, dass mit der Erfindung eine Betätigungseinrichtung mit Force-Feedback insbesondere für shift-by-wire-betätigte Gangwechselgetriebe geschaffen wird, die mit geringem baulichem Aufwand ermöglicht, dass dem Fahrer das Verhalten eines mechanisch rastierten Betätigungshebels präsentiert wird, obwohl eine mechanische Rastierung überhaupt nicht vorhanden ist. Zudem kann die virtuelle Rastierung sowohl bezüglich der Anzahl und des Abstands der Rastierpunkte, als auch bezüglich der Härte der Rastierung frei steuerbar variiert werden, oder es können spürbare Pulsationen als Feedback in ein Betätigungselement eingeleitet werden. Hierdurch wird es möglich, die Haptik und die Bewegungseigenschaften einer Betätigungseinrichtung für ein Gangwechselgetriebe rein softwareseitig in weitem Umfang zu verändern und an die Nutzerpräferenzen anzupassen. Sogar eine rein softwaregesteuerte Umschaltung der Haptik einer Betätigungseinrichtung beispielsweise zwischen einem Automatikwählhebel und einem Schalthebel für ein klassisches Schaltgetriebe lässt sich realisieren.

Die Erfindung leistet somit einen maßgeblichen Beitrag zur Verbesserung der Bauraum- und der Kosteneffektivität, der Ergonomie und des Bedienkomforts, insbesondere bei anspruchsvollen Anwendungen im Bereich der Getriebebetätigung von Kraftfahrzeugen; und stellt damit auch einen weiteren wesentlichen Schritt auf dem Weg des Ersatzes von aufwändigen mechanischen Komponenten durch Software dar.

### Bezugszeichenliste

- 1: Betätigungshebel
- 2: Gegenkraftelement
- 3: Gelenkkugel
- 4: Kugelschale
- 5: Lagerspalt
- 6: Magnetspuleneinrichtung
- 7: elektrischer Anschluss
- 8: Dichtungsbalg
- 9: Positionssensoreinrichtung
- 10: Aktuator

## Patentansprüche

1. Betätigungseinrichtung zur Auswahl von Schaltstufen eines shift-by-wire-Gangwechselgetriebes, die Betätigungseinrichtung umfassend ein Sockelgehäuse sowie einen in zumindest einer Lagerstelle (3, 4) dreh- oder schwenkbar gelagerten mechanischen Betätigungshebel (1), mit einer Positionssensoreinrichtung (9), sowie eine Force-Feedback-Einrichtung, wobei die Force-Feedback-Einrichtung ein auf den Betätigungshebel (1) wirkendes verstellbares Gegenkraftelement (2) umfasst, das Gegenkraftelement (2) enthaltend ein Fluid mit einer steuerbar variablen Viskosität, wobei das Gegenkraftelement (2) durch einen mit dem Fluid gefüllten Lagerspalt (5) der Lagerstelle (3, 4) des Betätigungshebels (1) gebildet ist, **dadurch gekennzeichnet, dass** die Lagerstelle durch ein Kugelgelenk mit Gelenkkugel (3) und Kugelschale (4) gebildet ist.

2. Betätigungseinrichtung nach Anspruch 1, **dadurch gekennzeichnet, dass** die Gelenkkugel (3) mit dem Betätigungshebel (1) und die Kugelschale (4) mit dem Sockelgehäuse der Betätigungseinrichtung verbunden ist.

3. Betätigungseinrichtung nach Anspruch 1 oder 2, **dadurch gekennzeichnet, dass** das Fluid mit der steuerbar variablen Viskosität ein magnetorheologisches Fluid ist, wobei im Bereich der Lagerstelle (3, 4) eine Spuleneinrichtung (6) zur Erzeugung eines Magnetfeldes im Lagerspalt (5) der Lagerstelle (3, 4) angeordnet ist.

4. Betätigungseinrichtung nach Anspruch 3, **dadurch gekennzeichnet, dass**
die Spuleneinrichtung (6) zur Erzeugung zumindest zweier unabhängig voneinander steuerbarer Magnetfelder mit im Wesentlichen senkrecht aufeinander stehender Magnetfeldrichtungen eingerichtet ist.

5. Betätigungseinrichtung nach einem der Ansprüche 1 bis 4, **dadurch gekennzeichnet, dass** die Force-Feedback-Einrichtung einen motorischen Aktuator (10) umfasst.

6. Betätigungseinrichtung nach Anspruch 5, **dadurch gekennzeichnet, dass** das verstellbare Gegenkraftelement (2) anhand eines Steuerungskennfelds zur Erzeugung von Gegenkräften eingerichtet ist, während der motorische Aktuator (10) anhand des Kennfelds zur aktuatorischen Bewegung des Betätigungshebels (1) eingerichtet ist.

7. Betätigungseinrichtung nach Anspruch 5 oder 6, **dadurch gekennzeichnet, dass** der Aktuator (10) ein elektrischer Servo-Getriebemotor ist.

8. Betätigungseinrichtung nach einem der Ansprüche 5 bis 7, **dadurch gekennzeichnet, dass** das Gegenkraftelement (2) und/oder der Aktuator (10) zur Erzeugung von Vibrationen eingerichtet ist.

## Claims

1. Activation device for selecting gearshift stages of a shift-by-wire change speed gearbox, the activation device comprising a base casing and a mechanical activation lever (1) which is rotatably or pivotably mounted at at least one bearing point (3, 4), having a position sensor device (9) and a force feedback device, wherein the force feedback device comprises an adjustable counter-force element (2) which acts on the activation lever (1), the counter-force element (2) containing a fluid with a controllably variable viscosity, wherein the counter-force element (2) is formed by a bearing gap (5), filled with the fluid, of the bearing point (3, 4) of the activation lever (1), **characterized in that** the bearing point is formed by a ball-and-socket joint with a joint ball (3) and a joint socket (4).

2. Activation device according to Claim 1, **characterized in that** the joint ball (3) is connected to the activation lever (1), and the joint socket (4) is connected to the base casing of the activation device.

3. Activation device according to Claim 1 or 2, **characterized in that** the fluid with the controllably variable viscosity is a magneto-rheological fluid, wherein in the region of the bearing point (3, 4) a coil device (6) is arranged for generating a magnetic field in the bearing gap (5) of the bearing point (3, 4).

4. Activation device according to Claim 3, **characterized in that** the coil device (6) is configured to generate at least two magnetic fields which can be controlled independently of one another and have magnetic field directions which are essentially positioned perpendicularly one on top of the other.

5. Activation device according to one of Claims 1 to 4, **characterized in that** the force feedback device comprises a motor-powered actuator (10).

6. Activation device according to Claim 5, **characterized in that** the adjustable counter-force element (2) is configured to generate opposing forces by means of a control characteristic diagram, while the motor-powered actuator (10) is configured to perform actuator-induced movement of the activation lever (1) by means of the characteristic diagram.

7. Activation device according to Claim 5 or 6, **characterized in that** the actuator (10) is an electric servo geared motor.

8. Activation device according to one of Claims 5 to 7, **characterized in that** the counter-force element (2) and/or the actuator (10) are/is configured to generate vibrations.

## Revendications

1. Dispositif de commande pour la sélection d'étages de commutation d'une transmission à changement de vitesse à commande électrique, le dispositif de commande comprenant un boîtier d'embase ainsi qu'un levier de commande (1) mécanique monté de manière rotative ou pivotante dans au moins un point de palier (3, 4), avec un dispositif de capteur de position (9), et comprenant un dispositif de retour de force, lequel dispositif de retour de force comprend un élément de force antagoniste (2) réglable agissant sur le levier de commande (1), l'élément de force antagoniste (2) contenant un fluide de viscosité variable ajustable, l'élément de force antagoniste (2) étant formé par une fente de palier (5) remplie de fluide du point de palier (3, 4) du levier de commande (1), **caractérisé en ce que** le point de palier est formé par un joint à rotule avec une rotule d'articulation (3) et un coussinet de rotule (4).

2. Dispositif de commande selon la revendication 1, **caractérisé en ce que** la rotule d'articulation (3) est connectée au levier de commande (1) et le coussinet de rotule (4) est connecté au boîtier d'embase du dispositif de commande.

3. Dispositif de commande selon la revendication 1 ou 2, **caractérisé en ce que** le fluide de viscosité variable ajustable est un fluide magnétorhéologique, un dispositif de bobine (6) étant disposé dans la région du point de palier (3, 4) pour produire un champ magnétique dans la fente de palier (5) du point de palier (3, 4).

4. Dispositif de commande selon la revendication 3, **caractérisé en ce que** le dispositif de bobine (6) est prévu pour produire au moins deux champs magnétiques pouvant être commandés indépendamment l'un de l'autre, avec des directions de champ magnétique essentiellement perpendiculaires l'une à l'autre.

5. Dispositif de commande selon l'une quelconque des revendications 1 à 4, **caractérisé en ce que** le dispositif de retour de force comprend un actionneur à moteur (10).

6. Dispositif de commande selon la revendication 5, **caractérisé en ce que** l'élément de force antagoniste réglable (2) est prévu pour générer des forces antagonistes à l'aide d'un champ caractéristique de commande, tandis que l'actionneur à moteur (10) est prévu pour effectuer le déplacement par actionneur du levier de commande (1) à l'aide du champ caractéristique.

7. Dispositif selon la revendication 5 ou 6, **caractérisé en ce que** l'actionneur (10) est un moteur de transmission assistée.

8. Dispositif de commande selon l'une quelconque des revendications 5 à 7, **caractérisé en ce que** l'élément de force antagoniste (2) et/ou l'actionneur (10) est prévu pour générer des vibrations.
